# EUROPEAN PATENT SPECIFICATION

(11) **EP 4 470 802 B1**
(45) Date of publication and mention of the grant of the patent: **29.04.2026**
(21) Application number: 24167236.9
(22) Date of filing: 28.03.2024
(51) Int. Cl.: B60D 1/06, B60R 9/06

(54) **BALL-CLAMPING COUPLER FOR REAR TRAILER HITCH**
KUGELKLEMMKUPPLUNG FÜR ANHÄNGERKUPPLUNG
COUPLEUR À SERRAGE PAR BILLES POUR ATTELAGE DE REMORQUE ARRIÈRE

(30) Priority: 19.01.2024 CN 202420141779 U
(43) Date of publication of application: 04.12.2024
(73) Proprietor: Wode Global (Qingdao) Outdoor Co., Ltd., Qingdao City Shandong Province (CN)
(72) Inventor: ZHAO, Yingchun, Qingdao City, Shandong Province (CN)
(74) Representative: Berggren Oy

(56) References cited:
- EP-A1- 3 608 131
- IT-A1- VR20 100 176
- US-A1- 2019 017 525

## Description

### Technical field

The present invention relates to the technical field of ball-clamping connection of rear trailer hitch, and in particular, to a ball-clamping coupler for a rear trailer hitch. EP 3 608 131 A1 discloses a ball-clamping coupler known in the prior art.

### Technical background

A hitch ball is also called tow hitch, ball-type rear hitch or hitch bar, tow bar, etc. Broadly speaking, a hitch ball refers to a complete set of towing system, which consists of three parts: a fixing carrier, a ball portion and a power harness (power control unit). The above three parts constitute a complete hitch ball system. In many cases, the power harness is to be installed as needed, and is not a necessary accessory for the functioning of a hitch ball system, therefore, a hitch ball, in terms of the narrow concept, just comprises two parts, the one is the fixing carrier to be fixed at the rear bumper beam of a vehicle; the other is the ball portion of the hitch ball with high strength.

A ball-clamping coupler existing so far is mostly configured as a structure of rotatable clamping blocks, usually based on the provision of a cooperation of a fixed clamping block and a movable clamping block, in which a handle rotates to drive the clamping blocks to rotate relative to each other so as to achieve the purpose of gripping the clamp ball stably.

However, according to the prior arts, the pair of clamping blocks are normally rotatably mounted on different rotation shafts, resulting in a connection gap being present between the adjacent clamping blocks, and further the dimensions of the movable hemisphere part and the fixed hemisphere part are fixed, while the size of a hitch ball deviates differently or the size thereof decreases with wear in use, so that the unadjustability of the fixed hemisphere part will result in the gripping not tightened or the horizontal posing of the load carrier not ensured, which in turn affects the stability of the gripping connection.

### Summary of the invention

Therefore an objective of the present invention is to provide a ball-clamping coupler for a rear trailer hitch, for solving the problems raised in the above background art.

In order to achieve the addressed objective, the present invention proposes the following technical solutions.

A ball-clamping coupler for a rear trailer hitch, comprising a housing and a clamp ball, which housing contains a movable ball-clamping block rotatably mounted in an inner space thereof and a fixed ball-clamping block, wherein the movable ball-clamping block and the fixed ball-clamping block are respectively provided with a hemispherical inner recess in their opposite inner walls in pair for cooperatively gripping the clamp ball, and wherein a rotating handle is rotatably mounted outside on the housing to drive the movable ball-clamping block to rotate toward the fixed ball-clamping block for gripping;
in which the housing is provided with an upper shaft and a lower shaft therein which are arranged offset in a first direction and parallel to each other, with the upper shaft and the lower shaft extending in a second direction that is perpendicular to the first direction, wherein both the movable ball-clamping block and the fixed ball-clamping block, at their upper ends, are put over on the upper shaft, while the fixed ball-clamping block, at its lower end, is put over on the lower shaft, and wherein the fixed ball-clamping block is provided with an elongated hole assembly with a radial length larger than the outer diameters of the upper shaft and the lower shaft, with the radial length of the elongated hole assembly extending in a third direction that is perpendicular to the first direction and the second direction; and in which the housing is provided with an adjusting screw bolt laterally mounted thereon, which is rotatable by screwing for pressing the fixed ball-clamping block, so that the fixed ball-clamping block is translationally movable in the third direction under the action of the adjusting screw bolt.

In the state of use of the ball-clamping coupler for a rear trailer hitch, the first direction is usually perpendicular to the road surface, e.g. corresponding to a vertical direction, and the second direction / the third direction may be parallel to the road surface, e.g. corresponding to a front-back direction or a left-right direction (a longitudinal or transverse direction) in a horizontal arrangement. In this context of the present application, the terms "upper" and "lower" in relation to position or orientation are used with respect to the first direction (e.g. the vertical direction).

Preferably, both the movable ball-clamping block and the fixed ball-clamping block, at their upper ends, are respectively provided with upper lugs, wherein the upper lugs on the movable ball-clamping block and the upper lugs on the fixed ball-clamping block are staggered with each other, and are respectively put over on the upper shaft, and wherein the fixed ball-clamping block, at its lower end, is provided with lower lugs, and the lower lugs is put over on the lower shaft.

Preferably, the oblong hole assembly comprises upper oblong holes and lower oblong holes, wherein the upper oblong holes and lower oblong holes are provided in the upper lugs and the lower lugs of the fixed ball-clamping block respectively. In order to enable the upper shaft and the lower shaft to be guidedly moved in the upper oblong holes and the lower oblong holes in the direction of extension of the radial length thereof, the radial width of the upper oblong holes and the radial width of the lower oblong holes correspond to the outer diameter of the upper shaft and the outer diameter of the lower shaft, respectively, or in other words, are essentially the same to an extent of a fitting tolerance set for the formation of the respective kinematic pair.

Preferably, the upper lugs on the movable ball-clamping block is respectively provided with a round hole matching the outer diameter of the upper shaft. That is to say, the inner diameter of round hole and the outer diameter of the upper shaft are essentially the same to an extent of a fitting tolerance set for the formation of the respective kinematic pair, so that the upper shaft represents an articulating shaft (hinge axis) for the movable ball-clamping block rotatably mounted to the housing.

Preferably, the housing, on an outer wall at the side close to the movable ball-clamping block, is provided with a rotation base, wherein an end of the rotating handle is rotatably mounted on the rotation base, wherein the movable ball-clamping block, on an outer wall at the side close to the rotation base, is provided with a hing base, and wherein the rotating handle is connected to the hing base through a link rod.

Preferably, the link rod, at the two end portions thereof, is provided with link-rod pins, wherein the link-rod pins are rotatably mounted on the hinge base and the rotating handle respectively.

Preferably, the housing, on an outer wall at the side close to the fixed ball-clamping block, is provided with a supporting member, wherein the adjusting screw bolt, being rotatable by screwing, is mounted to the supporting member, with one end of the adjusting screw bolt being pressed against an outer wall of the fixed ball-clamping block, and wherein the adjusting screw bolt is provided with a locknut thereon.

Preferably, a lower end of the clamp ball is connected with a fixing carrier, wherein the fixing carrier is to be connected externally to the rear of a vehicle.

Preferably, a limiting leaf spring is provided between the rotating handle and the rotation base for limiting the rotational angle; and a propulsive torsion spring is provided between the movable ball-clamping block and the upper shaft for providing a driving force to turn up or turn down the movable ball-clamping block.

Compared with the prior art, the present invention has the following beneficial effects.

According to the present invention, a single shaft configuration is provided, in which both the movable ball-clamping block and the fixed ball-clamping block are mounted on the same shaft (namely the upper shaft), so that the gap between the movable ball-clamping block and the fixed ball-clamping block is reduced, allowing the movable ball-clamping block to be sufficiently folded or closed upon rotation with respect to the fixed ball-clamping block, and thus a closer and tighter gripping for the clamp ball can be maintained; and by means of the arrangement that an oblong hole assembly cooperates with an adjusting screw bolt for pressing, the fixed hemisphere part can be moved back and forth translationally in parallel (namely translationally moved in the third direction), thereby enabling the opposite inner walls in pair of the movable ball-clamping block and the fixed ball-clamping block to be brought closer to or further away from each other, so as to achieve the purpose of adjusting the gripping gap and adapting to the dimensional deviation of the clamp ball, and thus to realize a stable gripping.

### Brief description of the drawings

Fig. 1 is a schematic view of the configuration according to the present invention in a clamped state;
Fig. 2 is a schematic perspective view of the configuration according to the present invention in a clamped state;
Fig. 3 is a schematic view of the configuration according to the present invention in a released state;
Fig. 4 is a schematic perspective view of the configuration according to the present invention in a released state;
Fig. 5 is an exploded view of the configuration according to the present invention;
Fig. 6 is a schematic perspective view that illstrates the movable ball-clamping block and the fixed ball-clamping block according to the present invention.

Reference signs in the figures: 1, housing; 2, rotation base; 3, upper shaft; 4, rotating handle; 5, adjusting screw bolt; 6, fixing carrier; 7, clamp ball; 8, movable ball-clamping block; 9, fixed ball-clamping block; 10, round hole; 11, upper oblong hole; 12, upper lug; 13, lower shaft; 14, lower oblong hole; 15, link rod; 16, hinge base; 17, propulsive torsion spring; 18, limiting leaf spring; 19, supporting member; 20, link-rod pin; 21, lower lug.

### Detailed description of the embodiments

The technical solutions according to the embodiments of the present invention will be described clearly and completely below with reference to the accompanying drawings in the embodiments of the present invention. Apparently, the described embodiments are merely some of rather than all of the embodiments of the present invention. All other embodiments acquired by those skilled in the art without creative efforts based on the embodiments of the present invention shall fall within the protection scope of the present application.

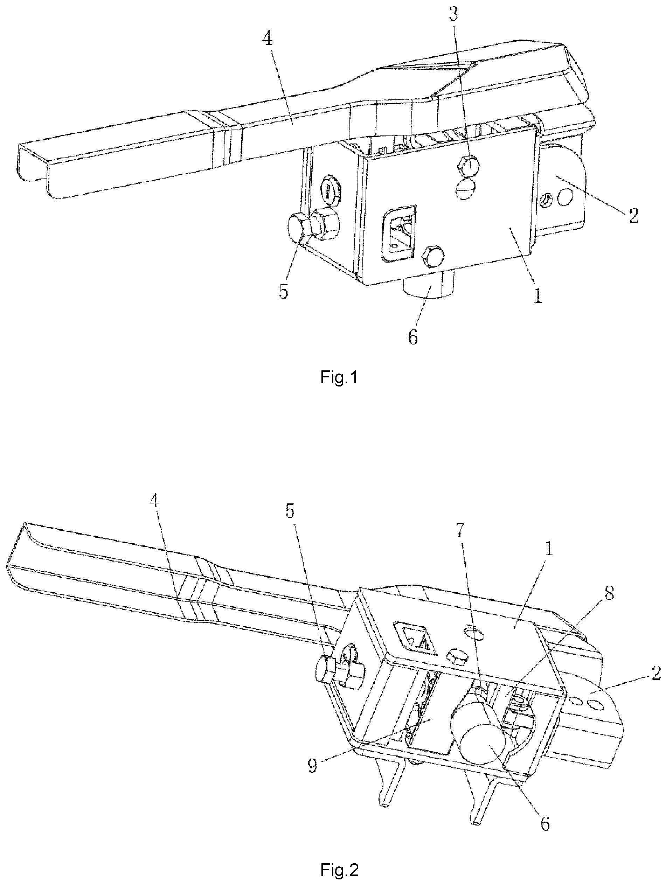

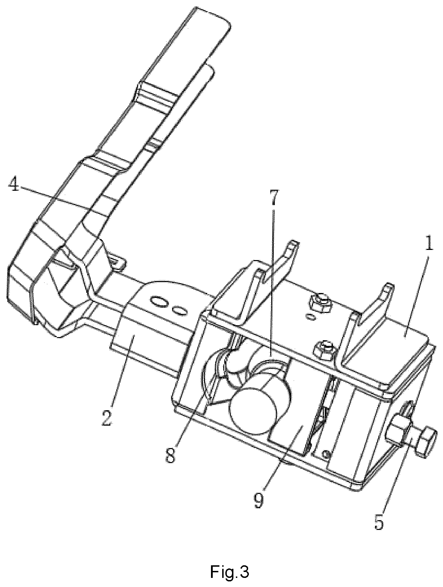

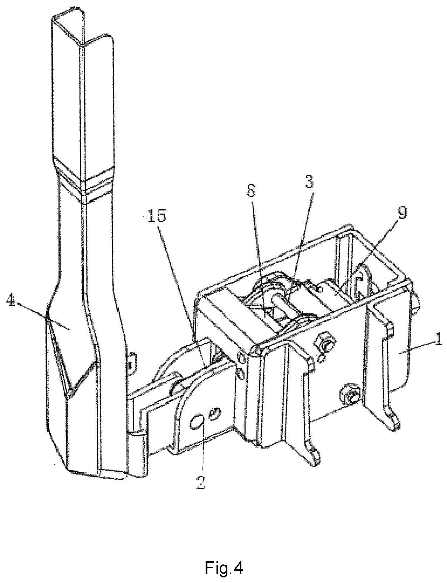

Referring to Figs. 1 to 6, the present invention provides a technical solution as follows.

### Embodiment 1:

As shown in Figs. 1 to 4, a ball-clamping coupler for a rear trailer hitch comprising a housing 1 and a clamp ball 7 is provided, which housing 1 contains a movable ball-clamping block 8 rotatably mounted in an inner space thereof and a fixed ball-clamping block 9, wherein the movable ball-clamping block 8 and the fixed ball-clamping block 9 are respectively provided with a hemispherical inner recess in their opposite inner walls in pair for cooperatively gripping the clamp ball 7, and wherein a rotating handle 4 is rotatably mounted outside on the housing 1 to drive the movable ball-clamping block 8 to rotate toward the fixed ball-clamping block 9 for gripping.

With the rotational driving effected by the rotating handle 4, the movable ball-clamping block 8 and the fixed ball-clamping block 9 are gripped relative to each other for achieving the purpose of gripping the clamp ball 7.

The housing 1 is provided with an upper shaft 3 and a lower shaft 13 therein, wherein both the movable ball-clamping block 8 and the fixed ball-clamping block 9, at their upper ends, are put over on the upper shaft 3, while the fixed ball-clamping block 9, at its lower end, is put over on the lower shaft 13, and wherein the fixed ball-clamping block 9 is provided with an elongated hole assembly with a radial length larger than the outer diameters of the upper shaft 3 and the lower shaft 13; and the housing 1 is provided with an adjusting screw bolt 5 laterally mounted thereon, which is rotatable by screwing for pressing the fixed ball-clamping block 9.

After gripping, the position of the movable ball-clamping block 8 is limited by the rotating handle 4 and the upper shaft 3. With the pressing effected by the adjusting screw bolt 5 when it rotates by screwing, the fixed ball-clamping block 9 is driven to move transversely. Due to the arrangement of the oblong hole assembly, the upper and lower ends of the fixed ball-clamping block 9 can thereby move transversely in a small stroke on the upper shaft 3 and the lower shaft 13. In the course of the adjustment of movement, the clearance caused by the wear or the dimensional deviation of the clamp ball is adapted so as to allow the movable ball-clamping block 8 and the fixed ball-clamping block 9 closely / tightly grip the clamp ball, and thus the stability of gripping is maintained.

### Embodiment 2:

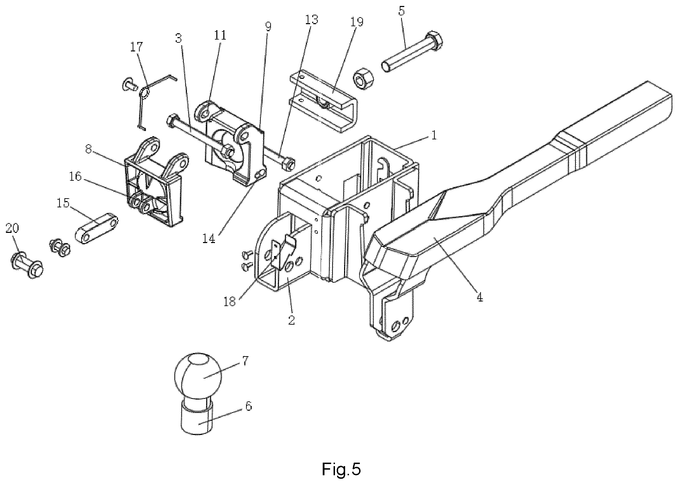

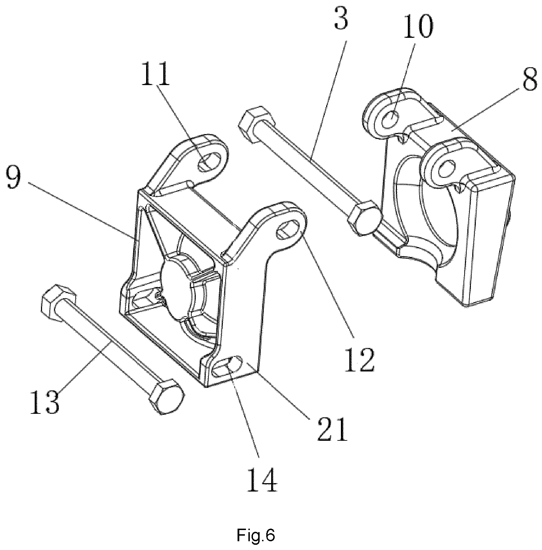

As shown in Figs. 5 and 6, on the basis of Embodiment 1, both the movable ball-clamping block 8 and the fixed ball-clamping block 9, at their upper ends, are respectively provided with upper lugs 12, wherein the upper lugs 12 on the movable ball-clamping block 8 and the upper lugs 12 on the fixed ball-clamping block 9 are staggered with each other, and are respectively put over on the upper shaft 3, and wherein the fixed ball-clamping block 9, at its lower end, is provided with lower lugs 21, and the lower lugs 21 is put over on the lower shaft 13; the oblong hole assembly comprises upper oblong holes 11 and lower oblong holes 14, wherein the upper oblong holes 11 and lower oblong holes 14 are provided in the upper lugs 12 and the lower lugs 21 respectively; the upper lugs 12 on the movable ball-clamping block 8 is respectively provided with a round hole 10 corresponding to the outer diameter of the upper shaft 3.

Due to the arrangement of the round hole 10, the position of the movable ball-clamping block 8 after rotation is limited; and with the upper oblong holes 11 and the lower oblong holes 14, the transverse sliding movement of the fixed ball-clamping block 9 is realized.

### Embodiment 3:

On the basis of Embodiment 2, the housing 1, on an outer wall at the side close to the movable ball-clamping block 8, is provided with a rotation base 2, wherein an end of the rotating handle 4 is rotatably mounted on the rotation base 2, wherein the movable ball-clamping block 8, on an outer wall at the side close to the rotation base 2, is provided with a hing base 16, and wherein the rotating handle 4 is connected to the hing base 16 through a link rod 15; the link rod 15, at the two end portions thereof, is provided with link-rod pins 20, wherein the link-rod pins 20 are rotatably mounted on the hinge base 16 and the rotating handle 4 respectively.

Due to the arrangement of the link rod 15 and the link-rod pin 20 cooperating with each other, a rotational connection between the rotating handle 4 and a side wall of the movable ball-clamping block 8 is implemented; and with the rotation of the rotating handle 4 pulling the link rod 15 to move, and futher with the rotation of the movable ball-clamping block 8 on the upper shaft 3 synchronously pulled by the link rod 15, the adjusting action of gripping or releasing the ball clamp 7 is realized.

### Embodiment 4:

On the basis of Embodiment 2, the housing 1, on an outer wall at the side close to the fixed ball-clamping block 9, is provided with a supporting member 19, wherein the adjusting screw bolt 5, being rotatable by screwing, is mounted to the supporting member 19, with one end of the adjusting screw bolt 5 being pressed against an outer wall of the fixed ball-clamping block 9, and wherein the adjusting screw bolt 5 is provided with a locknut thereon; a lower end of the clamp ball 7 is connected with a fixing carrier 6, wherein the fixing carrier 6 is to be connected externally to the rear of a vehicle; a limiting leaf spring 18 is provided between the rotating handle 4 and the rotation base 2 for limiting the rotational angle; and that a propulsive torsion spring 17 is provided between the movable ball-clamping block 8 and the upper shaft 3 for providing a driving force to turn up or turn down the movable ball-clamping block 8.

Due to the arrangement of the supporting member 19 and the adjusting screw bolt 5 cooperating with each other, the installation of the adjusting screw bolt 5 is realized, and then under the pressing effected by the adjusting screw bolt 5 as screwing, the fixed ball-clamping block 9 is pushed to keep sliding in the horizontal direction, so that the fixed ball-clamping block 9 is adjusted away from or close to the clamp ball 7, achieving the purpose of effectively locking the clamp ball 7 of different sizes; and due to the arrangement of the locknut, the purpose of restricting the respective adjusted position of the adjusting screw bolt 5 is achieved; and the limiting leaf spring 18 is to prevent the rotating handle 4 from exceeding a limit position point, since the rotating handle 4 has a rotational angle limit point when rotating in the rotation base 2 and it could not be closed when exceeding the limit point; and the propulsive torsion spring 17 is to provide an auxiliary driving force when the rotating handle 4 is opended and the movable ball-clamping block 8 is turning up or down around the upper shaft 3.

## Claims

1. A ball-clamping coupler for a rear trailer hitch, comprising a housing (1) and a clamp ball (7), which housing (1) contains a movable ball-clamping block (8) rotatably mounted in an inner space thereof and a fixed ball-clamping block (9), wherein the movable ball-clamping block (8) and the fixed ball-clamping block (9) are respectively provided with a hemispherical inner recess in their opposite inner walls in pair for cooperatively gripping the clamp ball (7), and wherein a rotating handle (4) is rotatably mounted outside on the housing (1) to drive the movable ball-clamping block (8) to rotate toward the fixed ball-clamping block (9) for gripping;
wherein the housing (1) is provided with an upper shaft (3) and a lower shaft (13) therein which are arranged offset in a first direction and parallel to each other, with the upper shaft (3) and the lower shaft (13) extending in a second direction that is perpendicular to the first direction, wherein both the movable ball-clamping block (8) and the fixed ball-clamping block (9), at their upper ends, are put over on the upper shaft (3), while the fixed ball-clamping block (9), at its lower end, is put over on the lower shaft (13), and wherein the fixed ball-clamping block (9) is provided with an elongated hole assembly with a radial length larger than the outer diameters of the upper shaft (3) and the lower shaft (13), with the radial length of the elongated hole assembly extending in a third direction that is perpendicular to the first direction and the second direction; and **characterized in that** the housing (1) is provided with an adjusting screw bolt (5) laterally mounted thereon, which is rotatable by screwing for pressing the fixed ball-clamping block (9), so that the fixed ball-clamping block (9) is translationally movable in the third direction under the action of the adjusting screw bolt (5).

2. The ball-clamping coupler for a rear trailer hitch according to claim 1, **characterized in that** both the movable ball-clamping block (8) and the fixed ball-clamping block (9), at their upper ends, are respectively provided with upper lugs (12), wherein the upper lugs (12) on the movable ball-clamping block (8) and the upper lugs (12) on the fixed ball-clamping block (9) are staggered with each other, and are respectively put over on the upper shaft (3), and wherein the fixed ball-clamping block (9), at its lower end, is provided with lower lugs (21), and the lower lugs (21) is put over on the lower shaft (13).

3. The ball-clamping coupler for a rear trailer hitch according to claim 2, **characterized in that** the oblong hole assembly comprises upper oblong holes (11) and lower oblong holes (14), wherein the upper oblong holes (11) and lower oblong holes (14) are provided in the upper lugs (12) and the lower lugs (21) of the fixed ball-clamping block (9) respectively.

4. The ball-clamping coupler for a rear trailer hitch according to claim 3, **characterized in that** the upper lugs (12) on the movable ball-clamping block (8) is respectively provided with a round hole (10) matching the outer diameter of the upper shaft (3).

5. The ball-clamping coupler for a rear trailer hitch according to claim 3, **characterized in that** the housing (1), on an outer wall at the side close to the movable ball-clamping block (8), is provided with a rotation base (2), wherein an end of the rotating handle (4) is rotatably mounted on the rotation base (2), wherein the movable ball-clamping block (8), on an outer wall at the side close to the rotation base (2), is provided with a hing base (16), and wherein the rotating handle (4) is connected to the hing base (16) through a link rod (15).

6. The ball-clamping coupler for a rear trailer hitch according to claim 5, **characterized in that** the link rod (15), at the two end portions thereof, is provided with link-rod pins (20), wherein the link-rod pins (20) are rotatably mounted on the hinge base (16) and the rotating handle (4) respectively.

7. The ball-clamping coupler for a rear trailer hitch according to claim 3, **characterized in that** the housing (1), on an outer wall at the side close to the fixed ball-clamping block (9), is provided with a supporting member (19), wherein the adjusting screw bolt (5), being rotatable by screwing, is mounted to the supporting member (19), with one end of the adjusting screw bolt (5) being pressed against an outer wall of the fixed ball-clamping block (9), and wherein the adjusting screw bolt (5) is provided with a locknut thereon.

8. The ball-clamping coupler for a rear trailer hitch according to claim 3, **characterized in that** a lower end of the clamp ball (7) is connected with a fixing carrier (6), wherein the fixing carrier (6) is adapted to be connected externally to the rear of a vehicle.

9. The ball-clamping coupler for a rear trailer hitch according to claim 6, **characterized in that** a limiting leaf spring (18) is provided between the rotating handle (4) and the rotation base (2) for limiting the rotational angle; and that a propulsive torsion spring (17) is provided between the movable ball-clamping block (8) and the upper shaft (3) for providing a driving force to turn up or turn down the movable ball-clamping block (8).

## Patentansprüche

1. Kugelklemmkoppler für eine Anhängerkupplung, umfassend ein Gehäuse (1) und eine Klemmkugel (7), wobei das Gehäuse (1) einen beweglichen, in einem Innenraum darin drehbar angebrachten Kugelklemmblock (8) und einen festen Kugelklemmblock (9) aufnimmt, wobei der bewegliche Kugelklemmblock (8) und der feste Kugelklemmblock (9) jeweils in ihren einander gegenüberliegenden Innenwänden paarweise eine halbkugelförmige Innenaussparung zum zusammenwirkenden Greifen der Klemmkugel (7) aufweisen, und wobei ein Drehgriff (4) außen am Gehäuse (1) drehbar angebracht ist, um den beweglichen Kugelklemmblock (8) zum Greifen in Richtung des festen Kugelklemmblocks (9) zu drehen;
wobei das Gehäuse (1) darin eine obere Welle (3) und eine untere Welle (13) aufweist, die versetzt in einer ersten Richtung und zueinander parallel angeordnet sind, wobei die obere Welle (3) und die untere Welle (13) sich in einer zweiten Richtung erstrecken, die senkrecht zur ersten Richtung verläuft, wobei sowohl der bewegliche Kugelklemmblock (8) als auch der feste Kugelklemmblock (9) an ihren oberen Enden auf der oberen Welle (3) aufgesteckt sind, während der feste Kugelklemmblock (9) an seinem unteren Ende auf der unteren Welle (13) aufgesteckt ist, und wobei der feste Kugelklemmblock (9) mit einer Langlochbaugruppe mit einer radialen Länge versehen ist, die größer als die Außendurchmesser der oberen Welle (3) und der unteren Welle (13) ist, wobei sich die radiale Länge der Langlochbaugruppe in einer dritten Richtung erstreckt, die senkrecht zur ersten Richtung und zur zweiten Richtung verläuft; und **dadurch gekennzeichnet, dass** das Gehäuse (1) mit einer seitlich daran angebrachten Einstellschraube (5) versehen ist, die zum Drücken gegen den festen Kugelklemmblock (9) durch Schraubdrehung drehbar ist, so dass der feste Kugelklemmblock (9) unter der Einwirkung der Einstellschraube (5) in der dritten Richtung translatorisch beweglich ist.

2. Kugelklemmkoppler für eine Anhängerkupplung nach Anspruch 1, **dadurch gekennzeichnet, dass** sowohl der bewegliche Kugelklemmblock (8) als auch der feste Kugelklemmblock (9) an ihren oberen Enden jeweils obere Lappen (12) aufweisen, wobei die oberen Lappen (12) am beweglichen Kugelklemmblock (8) und die oberen Lappen (12) am festen Kugelklemmblock (9) versetzt zueinander angeordnet sind und jeweils auf der oberen Welle (3) aufgesteckt sind, und wobei der feste Kugelklemmblock (9) an seinem unteren Ende mit unteren Lappen (21) versehen ist und die unteren Lappen (21) auf der unteren Welle (13) aufgesteckt sind.

3. Kugelklemmkoppler für eine Anhängerkupplung nach Anspruch 2, **dadurch gekennzeichnet, dass** die Langlochbaugruppe obere Langlöcher (11) und untere Langlöcher (14) umfasst, wobei die oberen Langlöcher (11) und die unteren Langlöcher (14) jeweils in den oberen Lappen (12) und den unteren Lappen (21) des festen Kugelklemmblocks (9) vorgesehen sind.

4. Kugelklemmkoppler für eine Anhängerkupplung nach Anspruch 3, **dadurch gekennzeichnet, dass** die oberen Lappen (12) am beweglichen Kugelklemmblock (8) jeweils mit einem Rundloch (10) versehen sind, das auf den Außendurchmesser der oberen Welle (3) abgestimmt ist.

5. Kugelklemmkoppler für eine Anhängerkupplung nach Anspruch 3, **dadurch gekennzeichnet, dass** das Gehäuse (1) an einer Außenwand an der Seite nahe dem beweglichen Kugelklemmblock (8) mit einem Drehsockel (2) versehen ist, wobei ein Ende des Drehgriffs (4) drehbar am Drehsockel (2) angebracht ist, wobei der bewegliche Kugelklemmblock (8) an einer Außenwand an der Seite nahe dem Drehsockel (2) mit einem Gelenksockel (16) versehen ist, und wobei der Drehgriff (4) über eine Verbindungsstange (15) mit dem Gelenksockel (16) verbunden ist.

6. Kugelklemmkoppler für eine Anhängerkupplung nach Anspruch 5, **dadurch gekennzeichnet, dass** die Verbindungsstange (15) an ihren beiden Endabschnitten mit Verbindungsstangenstiften (20) versehen ist, wobei die Verbindungsstangenstifte (20) jeweils am Gelenksockel (16) und am Drehgriff (4) drehbar angebracht sind.

7. Kugelklemmkoppler für eine Anhängerkupplung nach Anspruch 3, **dadurch gekennzeichnet, dass** das Gehäuse (1) an einer Außenwand an der Seite nahe dem festen Kugelklemmblock (9) mit einem Stützelement (19) versehen ist, wobei die durch Schraubdrehung drehbare Einstellschraube (5) am Stützelement (19) angebracht ist, wobei ein Ende der Einstellschraube (5) gegen eine Außenwand des festen Kugelklemmblocks (9) drückt, und wobei die Einstellschraube (5) mit einer Kontermutter darauf versehen ist.

8. Kugelklemmkoppler für eine Anhängerkupplung nach Anspruch 3, **dadurch gekennzeichnet, dass** ein unteres Ende der Klemmkugel (7) mit einem Befestigungsträger (6) verbunden ist, wobei der Befestigungsträger (6) dazu ausgelegt ist, extern mit dem Heck eines Fahrzeugs verbunden zu werden.

9. Kugelklemmkoppler für eine Anhängerkupplung nach Anspruch 6, **dadurch gekennzeichnet, dass** zwischen dem Drehgriff (4) und dem Drehsockel (2) eine Begrenzungs-Blattfeder (18) zur Begrenzung des Drehwinkels vorgesehen ist; und dass zwischen dem beweglichen Kugelklemmblock (8) und der oberen Welle (3) eine antreibende Torsionsfeder (17) vorgesehen ist, um eine Antriebskraft zum Hoch- oder Runterklappen des beweglichen Kugelklemmblocks (8) bereitzustellen.

## Revendications

1. Un coupleur à serrage de boule pour attelage arrière de remorque, comprenant un boîtier (1) et une boule de serrage (7), lequel boîtier (1) contient un bloc de serrage de boule mobile (8) monté rotatif dans un espace intérieur de celui-ci et un bloc de serrage de boule fixe (9), dans lequel le bloc de serrage de boule mobile (8) et le bloc de serrage de boule fixe (9) sont respectivement pourvus d'un évidement intérieur hémisphérique dans leurs parois intérieures opposées, appairés pour saisir de manière coopérante la boule de serrage (7), et dans lequel une poignée rotative (4) est montée rotative à l'extérieur sur le boîtier (1) pour entraîner le bloc de serrage de boule mobile (8) en rotation vers le bloc de serrage de boule fixe (9) pour le serrage ;
dans lequel le boîtier (1) est pourvu d'un arbre supérieur (3) et d'un arbre inférieur (13) en son sein, lesquels sont agencés de manière décalée dans une première direction et parallèles l'un à l'autre, l'arbre supérieur (3) et l'arbre inférieur (13) s'étendant dans une seconde direction qui est perpendiculaire à la première direction, dans lequel à la fois le bloc de serrage de boule mobile (8) et le bloc de serrage de boule fixe (9), au niveau de leurs extrémités supérieures, sont enfilés sur l'arbre supérieur (3), tandis que le bloc de serrage de boule fixe (9), au niveau de son extrémité inférieure, est enfilé sur l'arbre inférieur (13), et dans lequel le bloc de serrage de boule fixe (9) est pourvu d'un ensemble de trous oblongs ayant une longueur radiale supérieure aux diamètres extérieurs de l'arbre supérieur (3) et de l'arbre inférieur (13), la longueur radiale dudit ensemble de trous oblongs s'étendant dans une troisième direction qui est perpendiculaire à la première direction et à la seconde direction ; et **caractérisé en ce que** le boîtier (1) est pourvu d'un boulon de réglage (5) monté latéralement sur celui-ci, lequel peut être mis en rotation par vissage pour presser le bloc de serrage de boule fixe (9), de sorte que le bloc de serrage de boule fixe (9) est déplaçable en translation dans la troisième direction sous l'action du boulon de réglage (5).

2. Un coupleur à serrage de boule pour attelage arrière de remorque selon la revendication 1, **caractérisé en ce qu'**à la fois le bloc de serrage de boule mobile (8) et le bloc de serrage de boule fixe (9), au niveau de leurs extrémités supérieures, sont respectivement pourvus de pattes supérieures (12), dans lequel les pattes supérieures (12) sur le bloc de serrage de boule mobile (8) et les pattes supérieures (12) sur le bloc de serrage de boule fixe (9) sont décalées les unes par rapport aux autres, et sont respectivement enfilées sur l'arbre supérieur (3), et dans lequel le bloc de serrage de boule fixe (9), au niveau de son extrémité inférieure, est pourvu de pattes inférieures (21), et les pattes inférieures (21) sont enfilées sur l'arbre inférieur (13).

3. Un coupleur à serrage de boule pour attelage arrière de remorque selon la revendication 2, **caractérisé en ce que** l'ensemble de trous oblongs comprend des trous oblongs supérieurs (11) et des trous oblongs inférieurs (14), dans lequel les trous oblongs supérieurs (11) et les trous oblongs inférieurs (14) sont respectivement ménagés dans les pattes supérieures (12) et les pattes inférieures (21) du bloc de serrage de boule fixe (9).

4. Un coupleur à serrage de boule pour attelage arrière de remorque selon la revendication 3, **caractérisé en ce que** les pattes supérieures (12) sur le bloc de serrage de boule mobile (8) sont respectivement pourvues d'un trou rond (10) correspondant au diamètre extérieur de l'arbre supérieur (3).

5. Un coupleur à serrage de boule pour attelage arrière de remorque selon la revendication 3, **caractérisé en ce que** le boîtier (1), sur une paroi extérieure du côté proche du bloc de serrage de boule mobile (8), est pourvu d'une base de rotation (2), dans lequel une extrémité de la poignée rotative (4) est montée rotative sur la base de rotation (2), dans lequel le bloc de serrage de boule mobile (8), sur une paroi extérieure du côté proche de la base de rotation (2), est pourvu d'une base d'articulation (16), et dans lequel la poignée rotative (4) est reliée à la base d'articulation (16) par l'intermédiaire d'une biellette (15).

6. Un coupleur à serrage de boule pour attelage arrière de remorque selon la revendication 5, **caractérisé en ce que** la biellette (15), au niveau de ses deux parties d'extrémité, est pourvue d'axes de biellette (20), dans lequel les axes de biellette (20) sont montés rotatifs sur la base d'articulation (16) et la poignée rotative (4) respectivement.

7. Un coupleur à serrage de boule pour attelage arrière de remorque selon la revendication 3, **caractérisé en ce que** le boîtier (1), sur une paroi extérieure du côté proche du bloc de serrage de boule fixe (9), est pourvu d'un élément de support (19), dans lequel le boulon de réglage (5), pouvant être mis en rotation par vissage, est monté sur l'élément de support (19), une extrémité du boulon de réglage (5) étant pressée contre une paroi extérieure du bloc de serrage de boule fixe (9), et dans lequel le boulon de réglage (5) est pourvu d'un contre-écrou sur celui-ci.

8. Un coupleur à serrage de boule pour attelage arrière de remorque selon la revendication 3, **caractérisé en ce qu'**une extrémité inférieure de la boule de serrage (7) est reliée à un support de fixation (6), dans lequel le support de fixation (6) est adapté pour être relié extérieurement à l'arrière d'un véhicule.

9. Un coupleur à serrage de boule pour attelage arrière de remorque selon la revendication 6, **caractérisé en ce qu'**un ressort à lame de limitation (18) est prévu entre la poignée rotative (4) et la base de rotation (2) pour limiter l'angle de rotation ; et **en ce qu'**un ressort de torsion propulsif (17) est prévu entre le bloc de serrage de boule mobile (8) et l'arbre supérieur (3) pour fournir une force d'entraînement pour relever ou abaisser le bloc de serrage de boule mobile (8).
